# EUROPEAN PATENT APPLICATION

(11) **EP 2 775 012 A2**
(43) Date of publication of application: **10.09.2014**
(21) Application number: 14157092.9
(22) Date of filing: 27.02.2014
(51) Int. Cl.: C23C 22/00, B05D 7/22, B08B 9/00, B08B 9/027, F28G 9/00

(54) **Passivation of hollow copper strands in a stator water cooling system**

(30) Priority: 06.03.2013 US 201313786852
(71) Applicant: General Electric Company, Schenectady, New York 12345 (US)
(72) Inventor: Xu, James Jun, Schenectady, NY New York 12345 (US); Zawoysky, Ronald Joseph, Schenectady, NY New York 12345 (US); Rowe, Raymond Grant, Schenectady, NY New York 12345 (US); Squillacioti, Leonard Paul, Schenectady, NY New York 12345 (US); Yin, Weijun, Niskayuna, NY New York 12309 (US); Francese, Stephen Frank, Schenectady, NY New York 12345 (US)
(74) Representative: Szary, Anne Catherine

(57) **Abstract**

A system (200) for passivating a plurality of hollow copper strands (202) in a stator water cooling system including; a first storage tank (204) containing a cleaning solution, a second storage tank (206) containing rinsing water; a third storage tank (208) containing a passivation solution; a plurality of conduits (210) connecting the first (204), second (206), and third (208) storage tanks in a closed loop with the plurality of hollow copper strands (202); and an alkaline pump (212) for pumping the cleaning solution, the rinsing water, and the passivation solution through the closed loop.

## Description

### FIELD OF THE INVENTION

This invention relates generally to stator water cooling systems for a generator and more particularly to passivation of hollow copper strands in a stator water cooling system against obstruction.

### BACKGROUND OF THE INVENTION

High megawatt electrical power generators may have liquid cooling systems for their stator windings. Such a liquid cooling system may be known as a stator water cooling system (SWCS). Stator cooling fluid, e.g., oxygenated water whose dissolved oxygen content is recommended to be more than 2 ppm (parts per million, weight based), circulates through the SWCS to cool the stator windings. The cooling fluid removes heat from the stator windings generated by the high energy electrical current flowing through the stator windings. The SWCS includes a network of cooling passages throughout the stator and that extend between the stator windings. These cooling passages should remain open and free of obstructions to ensure a high flow of coolant fluid to all sections of the stator windings. The SWCS also includes several components external to the stator including piping, pumps, filters, a reservoir tank and a strainer. As known, an SWCS may include additional components.

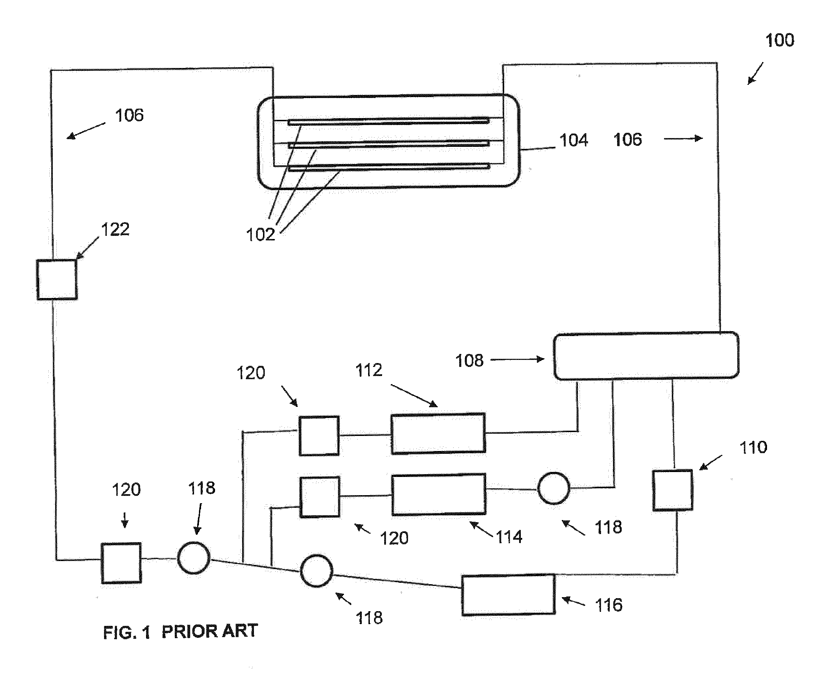

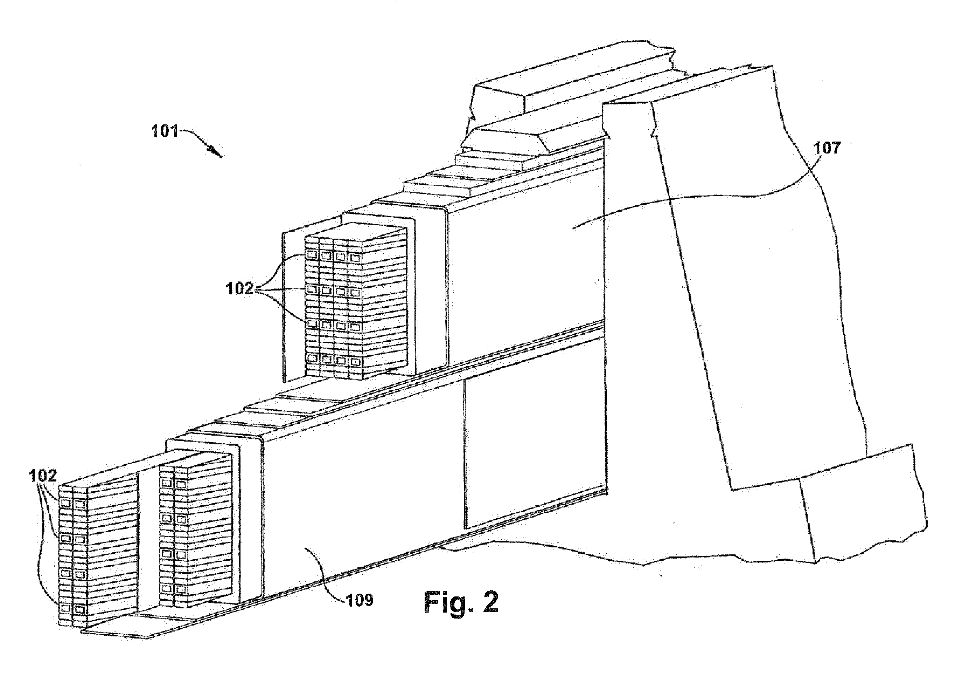

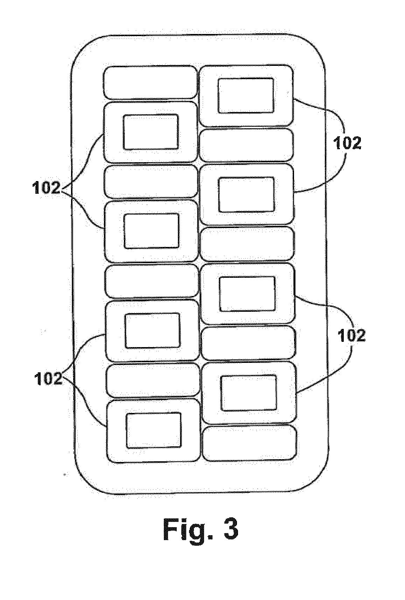

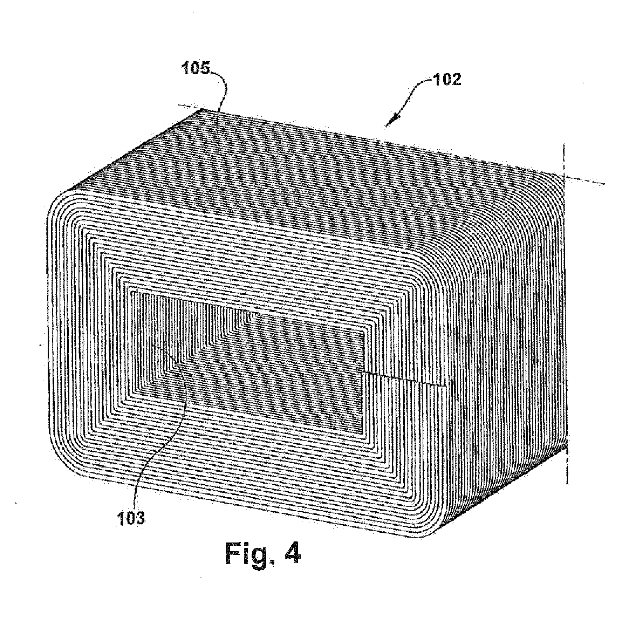

FIG. 1 shows schematically a stator water cooling system (SWCS) 100 which circulates coolant, e.g., oxygenated water, through a generator 104 that includes a plurality of stator windings (not shown), each stator winding including a plurality of copper strands 102. FIG. 2 shows a perspective cut-away view of a known stator winding 101 and the plurality of copper strands 102. Stator winding 101 includes a top stator bar 107 and a bottom stator bar 109 both stator bars 107, 109 including the plurality of copper strands 102. FIG. 3 shows a cross section view of the plurality of copper strands 102 in the stator winding. FIG. 4 shows a cross-sectional perspective view of a known copper strand 102. The plurality of copper strands 102 is hollow to allow the passage of the coolant through the plurality of copper strands 102. Accordingly, each copper strand 102 has an inner surface 103 and an outer surface 105. Referring again to FIG. 1, the SWCS 100 includes piping 106 external to the generator 104 that carries the coolant through a network including a reservoir tank 108, at least one pump 110, a deionizer bed 112, rectifier 114, at least one heat exchanger 116, flow control valves 118, at least one filter 120, and a strainer 122. The strainer 122 may include mesh (not shown) capable of catching precipitate-able solute and particulate impurities in the coolant. The strainer 122 is typically in the piping 106 upstream (referring to the flow of the coolant) of the generator 104 and in a cool (low) temperature portion of the SWCS 100.

Coolant continually circulates through the SWCS 100 network. The coolant is drawn from the reservoir tank 108 by the at least one pump 110, and flows into the at least one heat exchanger 116 which cools the fluid. The cooled fluid from the heat exchanger 116 flows through at least one filter 120 and the strainer 122 and into the plurality of copper strands 102. As the coolant flows over the plurality of copper strands 102, the coolant removes heat from the stator windings and the plurality of copper strands 102. The heat is carried by the coolant out of the generator 104 into the reservoir tank 108.

Any electrical charge accumulated by the coolant as it flows through the highly electrically charged passages in the stator is discharged as the coolant is circulated through the rectifier 114. The coolant is deionized in the deionizing bed 112 to reduce the tendency of metal oxides to form in the coolant. The flow rate of the coolant is controlled by flow control valves 118. The flow rate may be monitored by flow meters (not shown) that provide a feedback control for a controller (not shown) that operates the flow control valves 118.

The plurality of copper strands 102 have a tendency to accumulate copper oxides from the coolant of the SWCS 100 in the form of cuprous oxide and cupric oxide. The oxides build up on the inner surfaces of the copper strands 102 and reduce the flow of the coolant. As the deposition of copper oxides in the copper strands 102 increases, the resistance of the plurality of copper strands 102 to the coolant flow similarly increases. Accumulated copper oxide deposits in the plurality of copper strands 102 may eventually obstruct the flow of the coolant, reducing the flow of cool fluid through the stator, and disrupting proper cooling of the stator winding assembly.

Among copper oxides, the formation of particulate-like cuprous oxide (Cu₂O) layer is of chief concern. Cuprous oxides are reddish, loose, morphologically and chemically unstable, and thus are lost into the coolant stream in particulate forms. Cuprous oxide layers are formed on the inner surfaces 103 of the plurality of copper strands 102, as well as on the strainer 122. Due to insufficient exposure or insufficient oxygen content (such as 25 ppb -250 ppb (parts per billion, weight based)) in coolant flow, they are found to be associated with the most rapid copper corrosion rate because of its morphological instability and constitute a large portion in the blockage deposit. Cupric oxides (CuO), however, are morphologically and chemically stable. They tend to form a firm layer having better resistance to coolant flow and much slower development of thick blockage deposit on the inner surfaces 103 of the plurality of copper strands 102. Loss of the firm cupric oxide layer into coolant flow, when it would occur, forms dissolvable cupric oxide, instead of undissolvable particles such as cuprous oxide. These dissolvable cupric oxides tend to deposit on the strainer 122 that is replaceable once a year or so without discontinuing the operation.

The prevention of forming loose cuprous oxide on the inner surfaces 103 of the plurality of copper strands 102 proves to be an economic challenge and laborious effort. Complete depletion of oxygen (e.g., below 25ppb -250 ppb) in the SWCS 100 requires the most stringent control and rigorous treatment of large quantities of industrial coolant for daily usage such as deionized water. Rich oxygen content present in the water presents another challenge as oxidization of possibly fresh inner surfaces 103 of the plurality of copper strands 102 would go deep without stopping. It eventually erodes the plurality of copper strands 102 designed for decades-long service life. Oxygenated cooling water within a relatively narrow specification limit has been proposed and is being practiced. It tends to render the high ratio of forming a firm cupric oxide layer to a loose particulate cuprous oxide layer, thus reduced rate of copper corrosion, and reduce the occurrence of incidents of strand and strainer plugging. However, the level of oxygenation of water requires stringent control and consistent monitoring and adjustment during the generator operation where other key operating parameter maintenance is taken with priority. The observation of reddish or purplish layer deposited on inner surfaces 103 of the plurality of copper strands 102 of those decade-long serviced stator bars is often attributed to operational deviation from water oxygenation specification.

Passivation of the inner surfaces 103 of the plurality of copper strands 102 may be best performed either prior to or after they are Roebelled for forming stator bare bars. However, it is known that at that particular stage of the stator bar-making process, the grease and other detergents may be present on the inner surfaces 103 of the plurality of copper strands 102, which was carried from wire drawing process. However, even the inner surfaces 103 of the plurality of copper strands 102 have the clean and fresh copper surfaces, it would take weeks, if not a month to form desirable firm passivation layers with merely air exposure and yet its homogeneity and controlled time and thickness of the layer along axis of hollowed strands are not warranted.

### BRIEF DESCRIPTION OF THE INVENTION

A first aspect of the invention provides a system for passivating a plurality of hollow copper strands in a stator water cooling system, the system comprising: a first storage tank containing cleaning solution; a second storage tank containing rinsing water; a third storage tank containing a passivation solution; a plurality of conduits connecting the first, second, and thirds storage tanks in a closed loop with the plurality of hollow copper strands; and an alkaline pump for pumping the cleaning solution, the rinsing water, and the passivation solution through the closed loop.

A second aspect of the invention provides a method for passivating at least one hollow copper strand, comprising: cleaning an inner surface of the at least one hollow copper strand with a cleaning solution; rinsing, after the cleaning, the inner surface with a rinsing water; and passivating, after the cleaning, the inner surface with a passivation solution.

A third aspect of the invention provides a system for passivating at least one hollow copper strand, the system comprising: a first storage tank containing a cleaning solution; a second storage tank containing rinsing water; a third storage tank containing a passivation solution; a plurality of conduits connecting the first, second, and third storage tanks in a closed loop with the hollow copper strand; and an alkaline pump for pumping the cleaning solution, the rinsing water, and the passivation solution through the closed loop.

These and other aspects, advantages and salient features of the invention will become apparent from the following detailed description, which, when taken in conjunction with the annexed drawings, where like parts are designated by like reference characters throughout the drawings, disclose embodiments of the invention.

### BRIEF DESCRIPTION OF THE DRAWINGS

The above and other aspects, features and advantages of the invention will be better understood by reading the following more particular description of the invention in conjunction with the accompanying drawings.
FIG. 1 shows a schematic diagram of a known stator water cooling system (SWCS).
FIG. 2 shows a shows a perspective cut-away view of a known stator winding and the plurality of copper strands.
FIG. 3 shows a cross section view of the plurality of copper strands in the stator winding.
FIG. 4 shows a cross-sectional perspective view of a known copper strand.
FIG. 5 shows a schematic diagram of one embodiment of a system for passivating a plurality of hollow copper strands in a stator water cooling system in accordance with the present invention.
FIG. 6 shows a flow diagram of one embodiment of a process for passivating a plurality of hollow copper strands of stator water cooling system for a stator winding assembly in accordance with the present invention.

The drawings are not necessarily to scale. The drawings are merely schematic representations, not intended to portray specific parameters of the invention. The drawings are intended to depict only typical embodiments of the invention, and therefore should not be considered as limiting the scope of the invention. In the drawings, like numbering represents like elements.

### DETAILED DESCRIPTION OF THE INVENTION

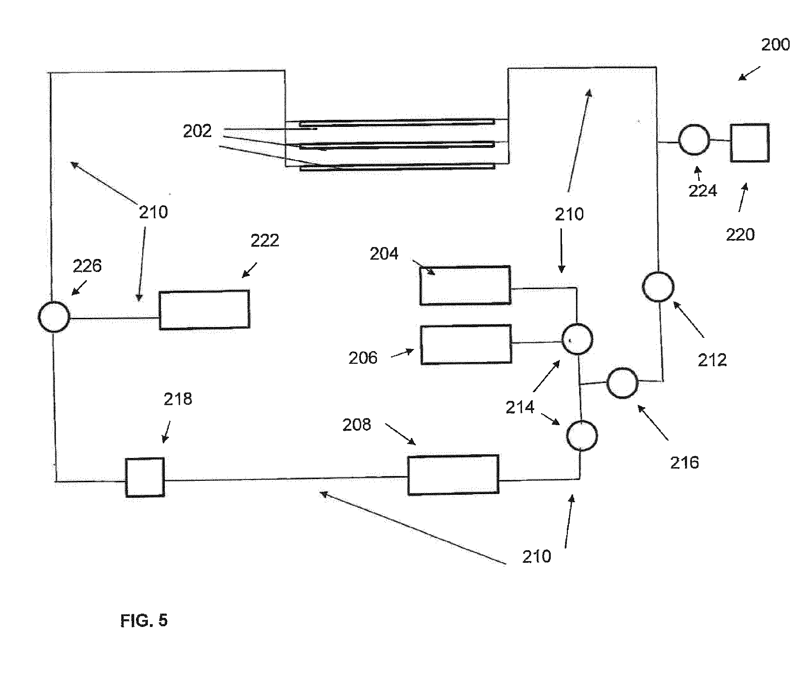

Referring to FIG. 5, a schematic diagram of one embodiment of the invention is shown. As shown in FIG. 5, a system 200 for passivating a plurality of hollow copper strands 202 in a stator water cooling system may be incorporated in a known SWCS (FIG. 1, 100) or may be a stand-alone system for passivating a plurality of hollow copper strands 202. The system 200 may include a first storage tank 204 containing a cleaning solution; a second storage tank 206 containing rinsing water; a third storage tank 208 containing a passivation solution; a plurality of conduits 210 connecting the first storage tank 204, the second storage tank 206, and the third storage tank 208 in a closed loop with the plurality of hollow copper strands 202; and an alkaline pump 212 for pumping the cleaning solution, the rinsing water, and the passivation solution through the closed loop. A person skilled in the art will readily recognize that the system 200 could be used to passivate at least one hollow copper strand 202.

The system 200 may further include at least one flow control valve 214 for controlling the flow of the cleaning solution, the rinsing water, and the passivation solution through the closed loop. Flow control valve 214 may be adjusted to various speeds and flow may be stopped. A person skilled in the art will readily recognize that flow control valve 214 may be placed anywhere in the closed loop to control flow of the cleaning solution, the rinsing water, and the passivation solution. At least one temperature control device 216 may be included for controlling the temperature of the cleaning solution, the rinsing water and/or the passivation solution. A person skilled in the art will readily recognize that more than one temperature control device 216 may be included. For example, each of the first, second, and third storage tanks 206, 208, 209 may include a temperature control device 216. At least one filter 218 may be included to filter debris and particles in the cleaning solution, the rinsing solution, or the passivation solution.

The passivation solution may include, for example, one of a sodium chlorite solution, a sodium hydroxide solution, a trisodium phosphate solution, deionized water, and any combination of the foregoing. The sodium chlorite solution may have a concentration of sodium chlorite in a liter of deionized water of about 30 grams/liter. The sodium hydroxide solution may have a concentration of sodium hydroxide in a liter of deionized water of about 10 grams/liter. The trisodium phosphate solution may have a concentration of trisodium phosphate in a liter of deionized water of about 5 grams/liter. The plurality of conduits 210 may be flexible or rigid and may include, for example, hoses and pipes. The plurality of conduits 210 may include polytetrafluoroethylene (PTFE) for resisting chemical reaction with the copper passivation solution. Other materials may similarly be used.

The system 200 may further include a hot air fan 220 for blowing hot air through the plurality of hollow copper strands 202 through liquid-cooled stator winding clips (not shown) after the rinsing and a drainage tank 222 for draining the plurality of hollow copper strands 202 after the cleaning, the rinsing, or the passivating. A hot air fan control valve 224 and a drainage tank valve 226 may be included to control the blowing and draining of the closed loop.

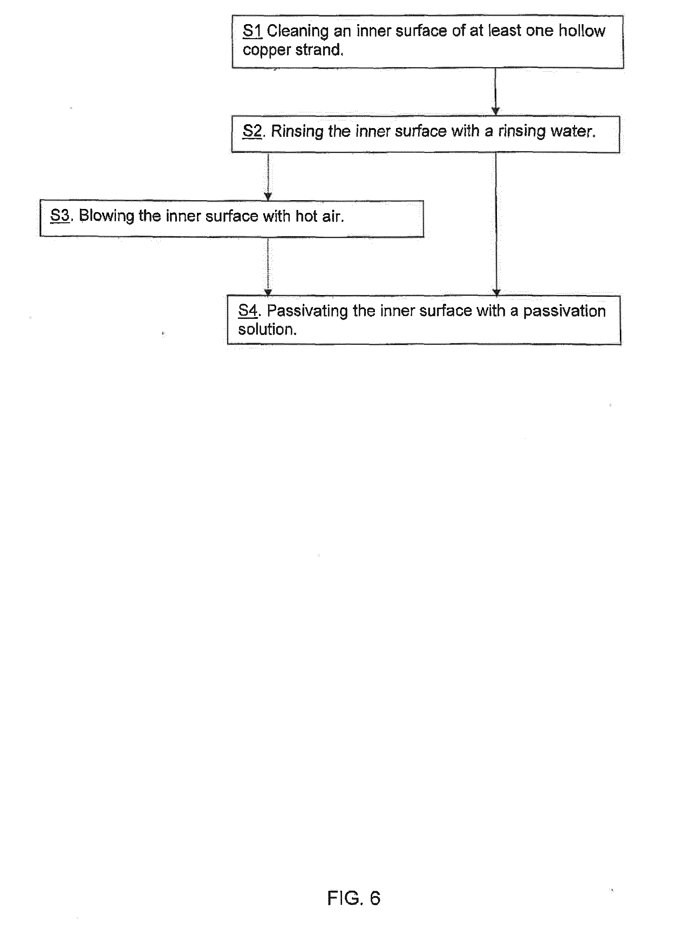

Referring to FIG. 6, a flow diagram of one embodiment of a method for passivating at least one hollow copper strand (FIG. 5, 202) is shown. As shown in FIG. 6, at S1, an inner surface of the at least one hollow copper strand (FIG. 5, 202) may be cleaned with a cleaning solution. Cleaning may remove oil, grease, dust, and other contaminants from the at least one hollow copper strand (FIG. 5, 202). The cleaning solution may include a detergent and water. The ratio of the detergent to the water may be about 1 part to about 3 parts. The cleaning solution may be at a temperature of about 50° C.

At S2, after the cleaning, the inner surface may be rinsed with a rinsing water. The rinsing includes rinsing with water. The rinsing water may be a temperature of about 120° C and the rinsing may be performed for about 3 minutes. At S3, optionally after the rinsing, hot air may be blown through the at least one hollow copper strand (FIG. 5, 202) for drying.

At S4, after the rinsing (or optionally after the blowing), the inner surface may be passivated with a passivation solution. The passivation solution may include one of sodium chlorite solution, sodium hydroxide solution, trisodium phosphate solution, and deionized water. A passivation temperature of the passivation solution may be in a range of about 50° C to about 70° C. A passivation duration may be a period of time of about 2 to about 30 minutes. At the completion of the passivation duration, the passivation solution may be drained from the at least one hollow copper strand (FIG. 5, 202). The passivating may include flowing the passivation solution at a flow rate of about 1 cubic foot/second. Alternatively, after the at least one hollow copper strand (FIG. 5, 202) are filled with passivation solution, the passivating may include allowing the passivation solution to stand in the at least one hollow copper strand (FIG. 5, 202) for the passivation duration.

It will be appreciated by a person skilled in the art, that the method and system presented herein may be used for passivating a single hollow copper strand. For example, each of the plurality of hollow copper strands (FIG. 5, 202) in the SWCS 100 could be passivated before they are installed in the SWCS 100 either as a new installation of equipment or as a service or repair of existing equipment or for any other use for a hollow copper strand (FIG. 5, 202).

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

While various embodiments are described herein, it will be appreciated from the specification that various combinations of elements, variations or improvements therein may be made by those skilled in the art, and are within the scope of the invention. In addition, many modifications may be made to adapt a particular situation or material to the teachings of the invention without departing from essential scope thereof. Therefore, it is intended that the invention not be limited to the particular embodiment disclosed as the best mode contemplated for carrying out this invention, but that the invention will include all embodiments falling within the scope of the appended claims.

## Claims

1. A system (200) for passivating at least one or a plurality of hollow copper strands (202) in a stator water cooling system, the system comprising:
a first storage tank (204) containing a cleaning solution;
a second storage tank (206) containing rinsing water;
a third storage tank (208) containing a passivation solution;
a plurality of conduits (210) connecting the first, second, and third storage tanks in a closed loop with the at least one or plurality of hollow copper strands; and
an alkaline pump (212) for pumping the cleaning solution, the rinsing water, and the passivation solution through the closed loop.

2. The system of claim 1, further comprising:
a flow control device (214) for controlling the flow of the cleaning solution, the rinsing water, and the passivation solution through the closed loop; and
a temperature control device (216) for controlling the temperature of the cleaning solution, the rinsing water, and the passivation solution.

3. The system of claim 1 or claim 2, wherein the passivation solution includes one of sodium chlorite solution, sodium hydroxide solution, trisodium phosphate solution, and deionized water.

4. The system of any preceding claim, wherein the plurality of conduits (210) include polytetrafluoroethylene (PTFE).

5. The system of any preceding claim, wherein the cleaning solution includes a detergent and water, wherein the ratio of the detergent to the water is about 1 part to about 3 parts.

6. The system of any preceding claim, further comprising:
a hot air fan (220) for blowing hot air through the plurality of hollow copper strands (202).

7. The system of any preceding claim, further comprising:
a drainage tank (222) for receiving a discharge from the plurality of hollow copper strands.

8. A method for passivating at least one hollow copper strand, comprising:
cleaning an inner surface of the at least one hollow copper strand with a cleaning solution (S1);
rinsing, after the cleaning, the inner surface with a rinsing water (S2); and
passivating, after the rinsing, the inner surface with a passivation solution (S4).

9. The method of claim 8, wherein the cleaning solution includes a detergent and water.

10. The method of claim 9, wherein the ratio of the detergent to the water is about 1 part to about 3 parts.

11. The method of claim 8 or claim 9, wherein the cleaning solution is at a temperature of about 50° C.

12. The method of any one of claims 8 to 11, wherein the rinsing water has a temperature of about 50°-70° C and the rinsing occurs for about 3 minutes.

13. The method of any one of claims 8 to 12, wherein the passivation solution includes one of sodium chlorite solution, sodium hydroxide solution, trisodium phosphate solution, and deionized water.

14. The method of any one of claims 8 to 13, wherein a temperature of the passivation solution during the passivating is in a range of about 50° C to about 70° C.

15. The method of any one of claims 8 to 14, wherein the passivating is for a period of time of about 2 to about 30 minutes.
